(19) Europäisches Patentamt

European Patent Office

Office européen des brevets

(11) **EP 1 670 167 A2**

(12) **EUROPEAN PATENT APPLICATION**

(43) Date of publication:
**14.06.2006 Bulletin 2006/24**

(51) Int Cl.:
*H04L 1/00* (2006.01)   *H03M 13/29* (2006.01)

(21) Application number: **05110526.0**

(22) Date of filing: **09.11.2005**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **10.12.2004 KR 2004104455**

(71) Applicant: **ELECTRONICS AND
TELECOMMUNICATIONS RESEARCH
INSTITUTE
Daejeon-city 305-350 (KR)**

(72) Inventors:
• **Lee, Hong-Sup**
  **Seoul (KR)**
• **Choi, Jung-Pil**
  **Daejeon-city (KR)**
• **Lee, Kwang-Chun**
  **Daejeon-city (KR)**
• **Nam, Sang-Woo**
  **Daejeon-city (KR)**

(74) Representative: **Betten & Resch
Patentanwälte,
Theatinerstrasse 8
80333 München (DE)**

(54) **Receiver and signal processing method thereof**

(57)     The present invention relates to a receiver for iteratively decoding by using a logarithm likelihood ratio (LLR) approximation scheme, and relates to a signal process method thereof. According to the present invention, a new approximation method is provided in order to calculate an essential equation, which includes calculations of exponent and logarithm, to correct errors caused by defects of a channel, and so it is possible to maintain low complexity and to reduce deterioration of performance.

## Fig. 1

**Description**

**BACKGROUND OF THE INVENTION**

**(a) Field of the Invention**

The present invention relates to a receiver in a communication system. More particularly, the present invention relates to a receiver for iteratively decoding codes by using a logarithm likelihood ratio (LLR) approximation scheme, and relates to a signal process method thereof.

**(b) Description of the Related Art**

In a communication system, it is required to transmit information properly through a channel from a transmitter to a receiver. A channel is a necessary medium in transmitting information from a transmitter to a receiver. However, in the channel, factors exist that interfere with proper transmission of information, and these factors cause transmission errors. To overcome the transmission errors, various efforts are provided in the communication system. Channel coding is an error detecting and error correction scheme available in a digital communication system, which is presently the most common communication system. Since the channel coding can effectively reduce a bit error rate (BER) occurring in communication, it is being utilized in most digital communication systems.

Among various channel codes, the turbo code, which is a parallel concatenated convolution code, was announced in 1993 by C. Berrou et al. The turbo code gained attention when it showed performance near to the Shannon Capacity by using iterative decoding. Outstanding performance of the turbo code originates in the iterative decoding using extrinsic information.

In the process of the iterative decoding of the turbo code, the LLR (i.e., bit probability information) is used, and a bit analyzing scheme using this LLR is called a maximum a posteriori (hereinafter MAP) scheme. However, an iterative decoding system according to the MAP scheme is very complex, because a large amount of calculation is needed to obtain the LLR even by the MAP scheme.

After the turbo code was announced, much research and effort for the development of iterative decoding was performed. As a consequence, other than the parallel concatenated convolution code announced by C. Berrou et al., various channel codes which were able to increase the performance of communication systems through iterative decoding were announced. Those codes show more advantageous performance in reducing quantity of calculation more effectively compared with the turbo code. As examples for said codes, there are the Repeat-Accumulate (RA) code (D. Divsalar, H. Jin, and R. McEliece, referring to 'Coding theorem for turbo-like codes', Allerton Conference, Sep. 1998), the Concatenated Single Parity Check code (concatenated SPC code) (L. Ping, S. Chan, and K.L. Yeung, referring to 'Iterative Decoding of Multidimensional Concatenated Single Parity Check Codes', IEEE ICC'98, vol. 1, pp. 131-135, Jun., 1998), and the Concatenated Zigzag code (L. Ping, X. Huang, and N. Phamdo, referring to 'Zigzag Codes and Concatenated Zigzag Codes', IEEE Trans. Information Theory, vol. 47, pp. 800-807, Feb., 2001).

However, even those codes require more than a small quantity of calculation when the iterative decoding by the MAP scheme, which uses the LLR as it is, is utilized. Therefore, mainly iterative decoding which follows a maximum logarithm MAP (Max Log MAP) scheme is used. The Max Log MAP scheme, which approximates the LLR by using a maximum element and a logarithm operator, can reduce complexity of a system caused by an LLR calculation. However, the Max Log MAP scheme can reduce the complexity of the system, but errors which occur in the process of LLR approximation depreciate performance of the system.

To solve the mentioned problems, many solutions have been proposed. They can maintain low complexity of a system, and prevent deterioration of performance by correcting errors occurring in the process in which the MAP scheme is approximated to the Max Log MAP scheme. For a representative example, there is a recursive error correction scheme using a look-up table (P. Robertson, E. Villebrun, and P. Hoeher, referring to 'A comparison of optimal and sub-optimal MAP decoding algorithms operating in the log domain', IEEE ICC'95, pp. 1009-1013, Jun., 1995). The recursive error correction has the merit that an error can be corrected exactly. However, error correction needs to be repeatedly performed many times, proportionally to the number of terms for calculating LLR, and a large quantity of calculation for LLR error correction is required because the number of terms for the LLR calculation is exponentially proportional to a code word length.

The above information disclosed in this Background of the Invention section is only for enhancement of understanding of the background of the invention and therefore, it should not be understood that all the above information forms the prior art that is already known in this country to a person or ordinary skill in the art.

## SUMMARY OF THE INVENTION

The present invention has been made in an effort to provide a receiver in a communication system and a signal process method thereof having advantages of iteratively decoding by using a logarithm likelihood ratio (LLR) approximation scheme.

An exemplary receiver according to an embodiment of the present invention corrects an error caused by a channel defect in a communication system using a channel code for error correction. Here, the receiver corrects the error by applying iterative decoding. The receiver includes a demodulator, an iterative decoder, and a sink.

The demodulator receives an output signal of a channel and converts the output signal to be decoded.

The iterative decoder repeatedly decodes a signal output by the demodulator in order to correct the error caused by the channel defect.

Here, the iterative decoder iteratively decodes the signal by using a logarithm likelihood ratio (LLR) which is calculated by a first equation $\log(e^{a_1}+e^{a_2}+....+e^{a_N})$, and the first equation is approximated by using a primary largest element $a_{max1}$ and a secondary largest element $a_{max2}$ among elements $a_1$ to $a_N$.

The sink uses a signal decoded by the iterative decoder.

In another embodiment, the iterative decoder calculates the LLR by approximating the first equation to be

$$\log(e^{a_1} + e^{a_2} + \cdots + e^{a_N}) \approx \max_{k=1,2,\cdots N} a_k (= a_{max1}) + \log(1 + e^{-|a_{max1} - a_{max2}|})$$

.

In a further embodiment, the iterative decoder calculates the $\log(1+e^{-|a_{max1}-a_{max2}|})$ term by using two approximated straight lines corresponding to a $\log(1+e^{-|a_{max1}-a_{max2}|})$ function curve.

In a still further embodiment, the iterative decoder processes the two approximated straight lines by adding a result of a bit shift calculation and a constant term when calculating the $\log(1+e^{-|a_{max1}-a_{max2}|})$ term by using the two approximated straight lines.

According to the present invention, in an exemplary signal process method of a receiver for iteratively decoding in order to correct an error caused by a channel defect in a communication system including a transmitter, a channel, and a receiver, the method includes steps (a), (b), and (c).

In (a), an output signal of a channel is received and demodulated.

In (b), the signal demodulated in (a) is iteratively decoded by applying a logarithm likelihood ratio (LLR) approximation method in order to correct the error caused by the channel defect.

In (c), the signal decoded in (b) is used.

Here, when applying the LLR approximation method, a first equation $\log(e^{a_1}+e^{a_2}+....+e^{a_N})$ is used.

Here, the first equation is approximated by using a primary largest element $a_{max1}$ and a secondary largest element $a_{max2}$ among elements $a_1$ to $a_N$.

In another embodiment, the first equation is approximated to an addition of the $a_{max1}$ and $\log(1+e^{-|a_{max1}-a_{max2}|})$.

In a further embodiment, the $\log(1+e^{-|a_{max1}-a_{max2}|})$ term is calculated by using two approximated straight lines corresponding to $\log(1+e^{-|a_{max1}-a_{max2}|})$ function curve.

In a still further embodiment, the two approximated straight lines are processed by adding up a result of a bit shift calculation and a constant term when calculating the $\log(1+e^{-|a_{max1}-a_{max2}|})$ term by using the two approximated straight lines.

## BRIEF DESCRIPTION OF THE DRAWINGS

FIG. 1 is a block diagram showing a communication system according to an embodiment of the present invention.

FIG. 2 shows a $\log(1+e^{-x})$ function and straight lines of two approximated functions thereof.

FIG. 3 shows a graph illustrating a bit error rate when the iterative decoding scheme according to an embodiment of the present invention is applied to the concatenated SPC code.

FIG. 4 shows a graph illustrating how the bit error rates change according to the number of iterative decoding with the iterative decoding scheme according to an embodiment of the present invention and the Max-Log-MAP scheme.

## DETAILED DESCRIPTION OF THE PREFERRED EMBODIMENTS

An embodiment of the present invention will hereinafter be described in detail with reference to the accompanying drawings.

In the following detailed description, only certain exemplary embodiments of the present invention have been shown and described, simply by way of illustration. As those skilled in the art would realize, the described embodiments may be modified in various different ways, all without departing from the spirit or scope of the present invention.

Accordingly, the drawings and description are to be regarded as illustrative in nature and not restrictive. Like reference numerals designate like elements throughout the specification.

Now, a receiver for iteratively decoding by using the LLR approximation scheme and a signal process method thereof in the communication system according to an embodiment of the present invention will be described in detail referring to the drawings.

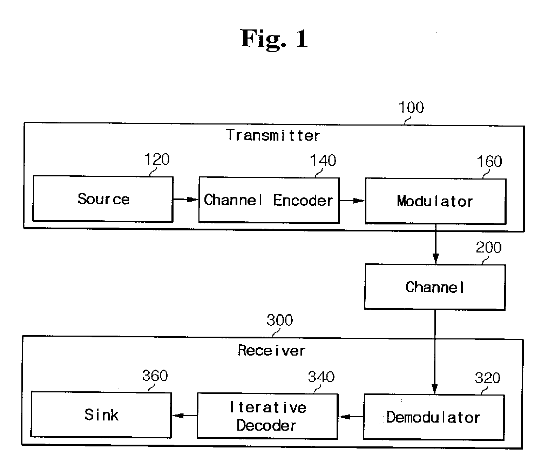

Firstly, referring to FIG. 1, a communication system to which an iterative decoding method according to an embodiment of the present invention is applied will be described.

FIG. 1 is a block diagram showing a communication system in which an iterative decoder according to an embodiment of the present invention is used.

As shown in FIG. 1, the communication system according to an embodiment of the present invention includes a transmitter 100, a channel 200, and a receiver 300. Here, the transmitter 100 includes a source 120, a channel encoder 140, and a modulator 160. The receiver 300 includes a demodulator 320, an iterative decoder 340, and a sink 360.

The source 120 generates a random data bit sequence which a user desires to transmit. The channel encoder 140 adds a redundancy bit for error correction to the random data bit sequence output by the source 120. The modulator 160 modulates the bit output by the channel encoder 140 by mapping the bit on a symbol in order to transmit the bit to the channel 200.

The channel 200 is a path through which data are transmitted. The channel 200 can be a wired channel or a wireless channel. In the channel 200, bit errors (e.g., noise) occur, and data can be damaged.

The demodulator 320 receives an output signal from the channel 200, and demodulates the output signal so that the iterative decoder 340 may decode it. The iterative decoder 340 corrects errors caused by the channel damage through the iterative decoding, and decodes the random data bit transmitted by the transmitter 100. The sink 360 uses the random data bit sequence decoded by the iterative decoder 340. Here, the iterative decoder 340 which is an iterative decoding device according to an embodiment of the present invention uses the LLR approximation method having advantages of the low system complexity and low deterioration of performance.

Hereinafter, the LLR approximation method which is used by the iterative decoding device according to an embodiment of the present invention (e.g., the iterative decoder 340) will be described. To decode a data bit in the iterative decoding device, the LLR first needs to be calculated. An essential equation used in calculating the LLR includes the equation "$\log(e^{a1}+e^{a2}+....+e^{aN})$". The calculation of the equation is very complex and difficult, because the equation includes a calculation of an exponential function which has an irrational number e (i.e., a natural logarithm base), a sum thereof, and calculation of the natural logarithm. Therefore, an embodiment of the present invention provides a simplifying method for the calculation. Now, an LLR approximation method which can simplify the complex calculation and reduce the deterioration of performance will be described.

Equation 1 below represents the LLR approximation method.

【Equation 1】

$$\log(e^{a_1} + e^{a_2} + \cdots + e^{a_N}) \approx \max_{k=1,2,\cdots N} a_k \left(= a_{\max 1}\right) + \log\left(1 + e^{-\left|a_{\max 1} - a_{\max 2}\right|}\right)$$

In Equation 1, log is a natural logarithm, e is a base of the natural logarithm, N is an arbitrary natural number, || is an absolute value function, and $a_{max1}$ and $a_{max2}$ are respectively the primary and the secondary largest elements of a set $\{a_1, a_2, a_3,....., a_N\}$ which has real number elements. In other words, the iterative decoding device (e.g., the iterative decoder 340) according to an embodiment of the present invention simply approximates the essential calculation (i.e., the left side of Equation 1) for obtaining the bit LLR to the right side of Equation 1.

In Equation 1, in the right side, the maximum $a_k(=a_{max1})$ term represents the primary largest element of the set $\{a_1, a_2, a_3,....., a_N\}$, and log $(1 +e^{-|amax1-amax2|})$ compensates an error by the LLR approximation. Generally, in the Max-Log-MAP scheme, the calculation is approximated only to the max $a_k$ $(=a_{max1})$ term of Equation 1. However, when the approximation is performed by the Max-Log-MAP scheme, the maximum error to occur in the approximation calculation will be logN when all the elements of the set $\{a_1, a_2, a_3,....., a_N\}$ are the same. This causes the performance of the system to be deteriorated. However, in an embodiment of the present invention, the approximation is performed by using the primary and the secondary largest elements $a_{max1}$ and $a_{max2}$ of the set $\{a_1, a_2, a_3,...., a_N\}$ like the "log $(1+e^{-|amax1-amax2|})$" term in the right side of Equation 1, so that the error may reduced.

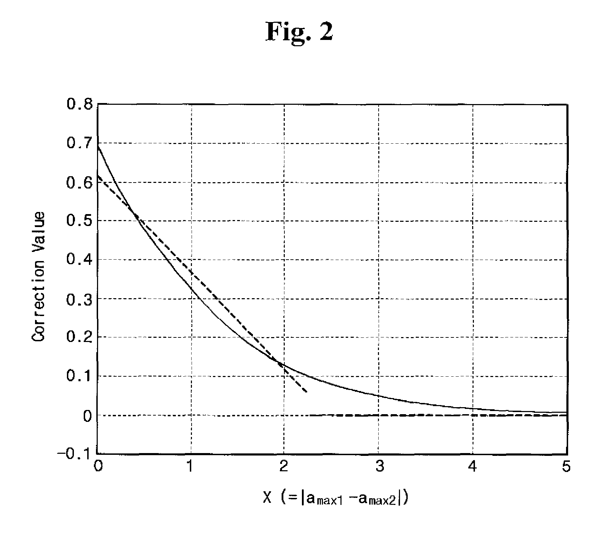

A logarithm operation is included in the "log $(1+e^{-|amax1-amax2|})$" term of the right side in Equation 1. To calculate this, a lookup table may be used, or a logarithm function approximated straight line may be used as shown in FIG. 2. The lookup table stores values corresponding to the function log $(1+e^{-|amax1-amax2|})$. A scheme using the lookup table is obvious to a person of ordinary skill in the art to which the present invention belongs, so a detailed description thereof will be omitted.

FIG. 2 shows a log$(l+e^{-x})$ function and straight lines of two approximated functions thereof. Here, in FIG. 2, the X axis indicates $|a_{max1}-a_{amx2}|$ in Equation 1, the Y axis indicates a correction value (i.e., log $(1+e^{-x})$) which is a correction value for a second term of the right side in Equation 1, the solid line indicates a curve log$(l+e^{-x})$, and the dotted line indicates the two straight lines approximated from the curve log$(l+e^{-x})$. The straight lines are indicated as in Equation 2 below.

## 【Equation 2】

$$0.615-0.25x \quad \text{for} \ (0<x<0.25)$$

$$0 \qquad \text{for otherwise}$$

As in Equation 2, two straight lines are obtained by adding a result of a bit shift operation and a constant term. In more detail, 0.615 is a constant, and it can be stored in a register or a memory as an initial value. Then, by adding -0.25x thereto, the straight lines may be obtained. Here, the bit shift calculation is performed as in the following description. When calculating 0.25x, it is possible to multiply x and 0.25. However, when calculating 0.25x by using the bit shift calculation, 0.25x can be expressed by shifting x being rightward by 2 bits, because 0.25 can be indicated as a power of 2 (i.e., $2^{(-2)}$). For example, when x=20, it is indicated to be $(00010100)_2$ in binary numbers, and 5 (i.e., 0.25x=0.25*20=5) is indicated to be $(00000101)_2$ in binary numbers which corresponds to the binary number generated by shifting $(00010100)_2$ rightward by 2 bits. According to the bit shift calculation, a quantity of calculations is less than that of multiplication, so the entire quantity of calculations may be reduced far more.

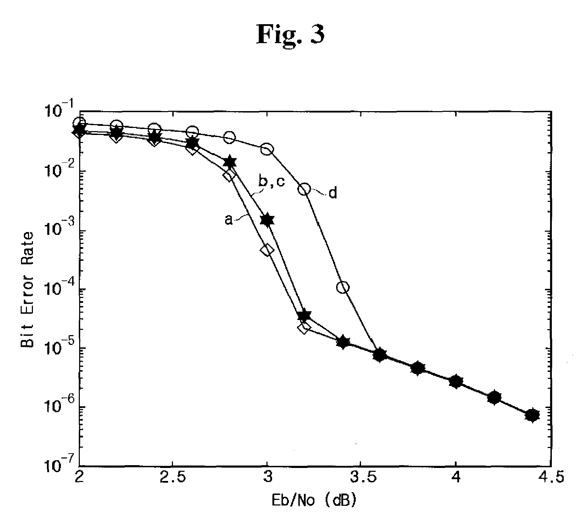

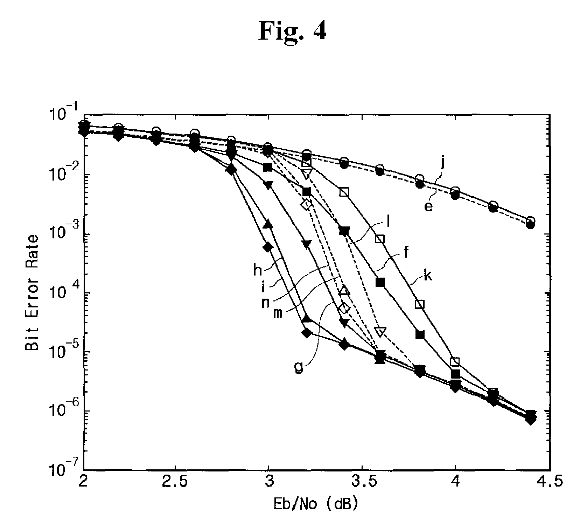

Hereinafter, referring to FIG. 3 and FIG. 4, performance when the iterative decoding scheme is applied on the basis of Equation 1 will be described.

FIG. 3 shows a graph illustrating the bit error rate when the iterative decoding scheme according to an embodiment of the present invention is applied to the concatenated SPC code. In FIG. 3, the horizontal axis indicates a decibel (dB) of an Eb/No (i.e., Energy per bit/Noise spectral density). In other words, in the concatenated SPC code, FIG. 3 indicates respective bit error rates, when the conventional MAP scheme (line a), the conventional Max-Log-MAP scheme (line d), and schemes proposed in embodiments of the present invention (lines b and c) are respectively applied. In FIG. 3, the line b indicates a bit error rate when the logarithm calculation is approximated to the two straight lines as in Equation 2, and the line c indicates a bit error rate when the function log $(1+e^{-x})$ is applied as it is. A simulation condition in FIG. 3 corresponds to a surrounding condition of FIG. 3 of a paper (L.Ping, S.Chan, and K.L. Yeung, 'Iterative Decoding of Multidimensional Concatenated Sink Parity Check Code', IEEE ICC'98, vol.1, pg. 131 to 135, June. 1998).

Referring to FIG. 3, the line b indicating the case of approximating to the two straight lines according to embodiments of the present invention and the line c indicating the case of just applying the logarithm function show almost the same bit error rate. When comparing lines b and c to which the iterative decoding scheme is applied according to embodiments of the present invention with the line a of the MAP scheme, bit error rates are similar with each others and a difference of performance is hardly found. In addition, when comparing lines b and c to which the iterative decoding scheme is applied according to embodiments of the present invention with the line d of the Max-Log-MAP scheme, the lines b and c show much lower bit error rates, and so it can be understood that they have much better performance.

FIG. 4 shows a graph illustrating how the bit error rates change according to the number of iterative decodings as to the iterative decoding scheme according to an embodiment of the present invention and the Max-Log-MAP scheme. In FIG. 4, lines e, f, g, h, and i respectively indicate the bit error rates to which the iterative decoding method according to an embodiment of the present invention is applied respectively 1 time, 3 times, 5 times, 10 times, and 20 times. Lines j, k, l, m, and n respectively indicate the bit error rates to which the iterative decoding according to the Max-Log-MAP scheme is applied 1 time, 3 times, 5 times, 10 times, and 20 times.

Referring to FIG. 4, the bit error rate of iterative decoding 20 times according to the Max-Log-MAP (line n) is similar to the bit error rate of iterative decoding 5 times according to an embodiment of the present invention (line g).

Therefore, compared with the Max-Log-MAP scheme, the iterative decoding method according to an embodiment of the present invention provides substantially the same or better performance even while decreasing the number of iterative decodings.

In the iterative decoding device, since the number of repeats relates to a decoding delay time, a lesser number of repeats reduce the decoding delay time. As described above, in the iterative decoding device according to the present invention, it is possible to decrease the number of repeats, so decoding delay time can be reduced.

Thus far, embodiments of the present invention have been described in detail, however the range of the present invention is not limited thereto. On the contrary, it should be understood that various modifications and equivalent arrangements according to the appended claims are covered by the spirit and scope of the present invention.

According to the present invention, a new approximation method to be applied to essential equations used in the LLR approximation is provided, so it is possible to maintain low complexity and to reduce deterioration of performance.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A receiver for correcting an error caused by a channel defect in a communication system using a channel code for error correction, wherein the receiver corrects the error by applying iterative decoding, comprising:

   a demodulator for receiving an output signal of a channel and converting the output signal to be decoded;
   an iterative decoder for repeatedly decoding a signal output by the demodulator in order to correct the error caused by the channel defect, wherein the iterative decoder iteratively decodes the signal by using a logarithm likelihood ratio (LLR) which is calculated by a first equation $\log(e^{a1}+e^{a2}+....+e^{aN})$, and wherein the first equation is approximated by using a primary largest element $a_{max1}$ and a secondary largest element $a_{max2}$ among elements $a_1$ to $a_N$; and
   a sink using a signal decoded by the iterative decoder.

2. The receiver of claim 1, wherein the iterative decoder calculates the LLR by approximating the first equation to be

$$\log(e^{a_1}+e^{a_2}+\cdots+e^{a_N}) \approx \max_{k=1,2,\cdots N} a_k (=a_{\max 1}) + \log(1+e^{-|a_{\max 1}-a_{\max 2}|})$$

.

3. The receiver of claim 2, wherein the iterative decoder calculates the $\log(1+e^{-|a_{max1}-a_{max2}|})$ term by using two approximated straight lines corresponding to a $\log(1+e^{-|a_{max1}-a_{max2}|})$ function curve.

4. The receiver of claim 3, wherein the iterative decoder processes the two approximated straight lines by adding a result of a bit shift calculation and a constant term when calculating the $\log(1+e^{-|a_{max1}-a_{max2}|})$ term by using the two approximated straight lines.

5. A signal process method of a receiver for iteratively decoding in order to correct an error caused by a channel defect in a communication system comprising a transmitter, a channel, and a receiver, the method comprising:

   (a) receiving an output signal of a channel and demodulating the output signal;
   (b) iteratively decoding the signal demodulated in (a) by applying a logarithm likelihood ratio (LLR) approximation method in order to correct the error caused by the channel defect; and
   (c) using the signal decoded in (b),

   wherein, when applying the LLR approximation method, a first equation $\log(e^{a1}+e^{a2}+....+e^{aN})$ is used, and wherein the first equation is approximated by using a primary largest element $a_{max1}$ and a secondary largest element $a_{max2}$ among $a_1$ to $a_N$.

6. The signal process method of claim 5, wherein the first equation is approximated to an addition of the $a_{max1}$ and

$\log(1+e^{-|amax1-amax2|})$.

7. The signal process method of claim 6, wherein the $\log(1+e^{-|amax1-amax2|})$ term is calculated by using two approximated straight lines corresponding to a $\log(1+e^{-|amax1-amax2|})$ function curve.

8. The signal process method of claim 7, wherein the two approximated straight lines are processed by adding a result of a bit shift calculation and a constant term when calculating the $\log(1+e^{-|amax1-amax2|})$ term by using the two approximated straight lines.

# Fig. 1

# Fig. 2

$X \ (=|a_{max1} - a_{max2}|)$

# Fig. 3

## Fig. 4